Europäisches Patentamt
European Patent Office
Office européen des brevets

(11) Veröffentlichungsnummer: **0 002 767**
**A1**

# (12) EUROPÄISCHE PATENTANMELDUNG

(21) Anmeldenummer: **78101740.5**

(51) Int. Cl.²: **C 08 F 20/58**

(22) Anmeldetag: **16.12.78**

(30) Priorität: **22.12.77 DE 2757206**

(43) Veröffentlichungstag der Anmeldung: **11.07.79**
**Patentblatt** 79/14

(84) Benannte Vertragsstaaten: **BE DE FR GB NL**

(71) Anmelder: **BASF Aktiengesellschaft, Carl-Bosch-Strasse 38, D-6700 Ludwigshafen (DE)**

(72) Erfinder: **Himmele, Walter, Dr., Eichenweg 14, D-6909 Walldorf (DE)**
Erfinder: **Naarmann, Herbert, Dr., Haardtblick 15, D-6719 Wattenheim (DE)**

(54) **Polyamidacetate und ein Verfahren zur Herstellung derartiger Polymerisate.**

(57) Die Erfindung betrifft Polymerisate, die Strukturelemente der allgemeinen Formel

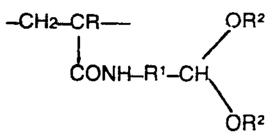

enthalten und die Herstellung derartiger Polyamidacetate durch Polymerisation.

Die neuen Polymeridate können Homopolymerisate sein, die nur die oben angegebenen Strukturelemente enthalten, als auch Copolymerisate mit Verbindungen, die mit der entsprechend ungesättigten Verbindung $CH_2=CR-CONHR^1CH\ (OR^2)_2$ copolymerisierbar sind. Alle Polymerisate enthalten in der Seitenkette als Substituent den Amidoacetalrest $CONHR^1CH(OR^2)_2$ und sind dementsprechend reaktiv. Sie sind leicht modifizierbar und können für die Herstellung von Formkörpern, Überzüge, Klebemittel oder zum Veredeln von Textilien verwendet werden.

EP 0 002 767 A1

BAD ORIGINAL

BASF Aktiengesellschaft O. Z. 0050/032951

## Polyamidacetale

Die Erfindung betrifft neue Polymerisate und ein Verfahren zur Herstellung derartiger Polymerisate.

Der Erfindung lag die Aufgabe zugrunde, Polymerisate zu schaffen, die verkappte funktionelle Gruppen enthalten und darüber hinaus verseifungsstabil und chemisch modifizierbar sind.

Die Aufgabe wird gelöst durch Polymerisate mit K-Werten von 10 bis 160, die Strukturelemente der allgemeinen Formel

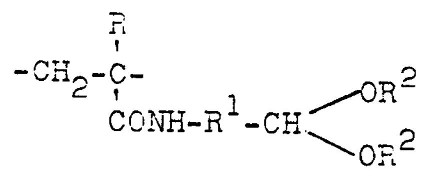

(I)

enthalten, wobei

$R$ = H, $CH_3$
$R^1$ = $C_1$- bis $C_8$-Alkylen, Cycloalkylen, Arylen
$R^2$ = $C_1$- bis $C_4$-Alkyl
bedeuten.

Pre/Fe

Bei derartigen Polymerisaten handelt es sich um oligomere oder makromolekulare Stoffe, die in den Seitenketten eine Acetal-Gruppe aufweisen, und die dementsprechend reaktiv sind.

Eine weitere Aufgabe der Erfindung ist die Herstellung derartiger Polymerisate.

Diese Aufgabe wurde dadurch gelöst, daß man ungesättigte Verbindungen der allgemeinen Formel

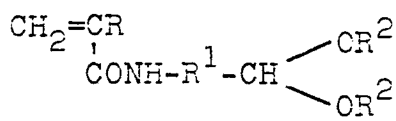

(II)

gegebenenfalls zusammen mit anderen olefinisch ungesättigten Verbindungen polymerisiert.

In der Formel II haben die Reste R, $R^1$ und $R^2$ die unter Formel I angegebene Bedeutung.

Unter Polymerisaten mit K-Werten von 10 bis 160, welche Strukturelemente der allgemeinen Formel:

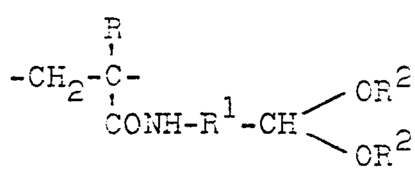

enthalten, werden oligomere oder makromolekulare Stoffe verstanden, die ganz oder im wesentlichen oder teilweise aus wiederkehrenden Einheiten der Formel:

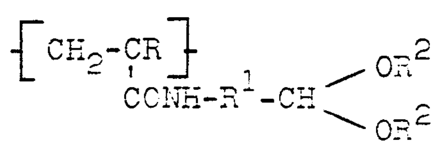

bestehen, worin der Formelteil $\left[ CH_2-\underset{|}{C}R \right]$ ein Teil der Polymerisatketteist. Die Polymerisate enthalten in der Seitenkette als Substituent den Amidoacetal-Rest $-CONH-R^1-CH(OR^2)_2$. Die allgemeine Formel beschreibt also Homopolymerisate, d.h. Polymerisate, die nur die oben angegebenen Strukturelemente enthalten, als auch Copolymerisate mit Verbindungen, die mit der entsprechenden olefinisch ungesättigten Verbindung der allgemeinen Formel II copolymerisiert sind.

Unter K-Wert der Polymerisate wird dabei die technische Kenngröße verstanden, die zur Charakterisierung des Polymerisationsgrades eines Polymerisates üblich ist. die K-Werte der vorliegenden Polymerisate wurden nach H. Fikentscher, Cellulosechemie <u>13</u> (1932) 58 - 64 und 71 - 74, 1 gewichtsprozentig in Dimethylformamid bei einer Temperatur von 25°C gemessen; dabei bedeutet $K = k \cdot 10^3$.

Die neuen Polymerisate werden beispielsweise hergestellt durch Polymerisation von:

$$CH_2 = CH - CO - NH - \overset{CH_3}{\overset{|}{CH}} - CH(OCH_3)_2 \qquad (III),$$

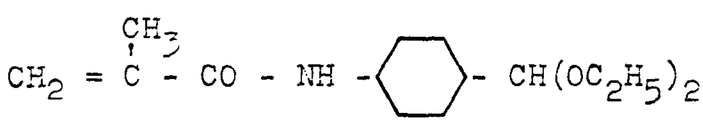 (IV),

(wobei 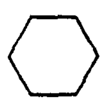 für Cyclohexan steht)

$$CH_2 = \underset{CH_3}{\underset{|}{C}} - CO - NH - \underset{CH_3}{\underset{|}{CH}} - (OCH_3)_2 \qquad (V),$$

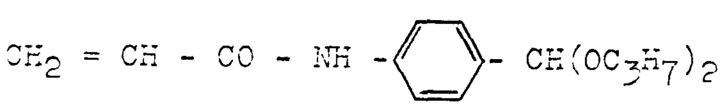 (VI).

Die Monomeren der Formel II können jeweils für sich allei- ne polymerisiert werden. Selbstverständlich ist es auch möglich, Gemische verschiedener dieser Verbindungen zu copolymerisieren. Außerdem sind sie der Copolymerisation mit anderen olefinisch ungesättigten Monomeren zugänglich.

Die Monomeren II werden nach bekannten Verfahren hergestellt durch Umsetzen des Acryl- bzw. Methacrylsäurechlorids mit den entsprechenden Aminoverbindungen in ätherischen Lösungen bei Temperaturen zwischen 0 und 50°C, in Gegenwart von Trialkylaminen.

Geeignete olefinisch ungesättigte Monomere, die gegebenenfalls mit dem Monomeren der Formel II radikalisch copolymerisiert werden können, sind beispielsweise Olefine, wie Äthylen, Propylen, Butadien, Isopren; Styrol und substituierte Styrole, wie α-Methylstyrol, p-Chlorstyrol und p-Methylstyrol; Acrylsäureester und Methacrylsäureester, insbesondere solche mit 1 bis 18, vorzugsweise 1 bis 8 Kohlenstoffatomen im Alkoholrest, beispielsweise Acryl- oder Methacrylsäureester des Methanols, Äthanols, Butanols oder Äthylcyclohexanols; Monoester des Äthylenglykols, Propylenglykols-1,2, 1,3-Butenylglykols oder Butylenglykols-1,4; Acryl- und Methacrylsäureamid und substituierte Amide, wie N-Methylolacrylamid und deren Äther, wie N-Methylolacrylamidbutyläther, N-Methylolmethacrylamidmethyläther; Acryl- und Methacrylnitril; Vinylester wie Vinylacetat und Vinylpropionat; Vinyläther wie Methyl-, Äthyl- oder Alkylvinyläther mit Alkylresten von 3 bis 6 Kohlenstoffatomen; ferner Fumar-, Malein- oder Itaconsäure, Ester dieser Säuren und Maleinsäureanhydrid. Von den vorstehend genannten Verbindungen können auch gleichzeitig zwei oder mehr mit dem genannten Monomeren der Formel II copolymerisiert werden. Gegebenenfalls können auch difunktionelle Vernetzer wie beispielsweise Divinylbenzol in

BAD ORIGINAL

Mengen von 0,5 bis 3 Gewichtsprozent als Comonomere verwendet werden.

Für die Herstellung von Copolymerisaten kann der Anteil an den olefinisch ungesättigten Monomeren der Formel II im Monomerengemisch in weiten Grenzen schwanken, beispielsweise zwischen 1 und 99, insbesondere zwischen 5 und 80, vorzugsweise zwischen 8 und 60 Gewichtsprozent, bezogen auf das Gesamtgewicht der Monomeren.

Zur Auslösung der Polymerisation werden übliche Radikale bildende Initiatoren verwendet. Geeignete Initiatoren sind beispielsweise Wasserstoffperoxid, organische Hydroperoxide und Peroxide, wie Caproylperoxid, Lauroylperoxid, tert.-Butylperbenzoat, Dicumylperoxid, p-Menthanhydroperoxid, Cumolhydroperoxid, Bernsteinsäureperoxid, ferner unter Polymerisationsbedingungen in Radikale zerfallende aliphatische Azoverbindungen, wie 2,2'-Azo-bis-isobutyronitril und analoge Azonitrile, die beispielsweise in J. Hine "Reaktivität und Mechanismus in der organischen Chemie", Verlag Georg Thieme, Stuttgart (1960), Seite 412, aufgeführt sind, sowie übliche Redoxkatalysatorsysteme, wie die Systeme Kalium- oder Ammoniumpersulfat und Ascorbinsäure, Natriumhydrosulfit oder Eisen-II-salze.

Geeignet sind ferner die als Radikalbildner bekannten Chelate von Übergangsmetallen, insbesondere solche, in denen das Metall in einer ungewöhnlichen Wertigkeit vorliegt, wie Chelate des Mangan(III), Kobalt(III, Kupfer(II) und Cer(IV). Im allgemeinen werden als Chelatbildner 1,3-Dicarbonylverbindungen verwendet. Als Beispiele seien genannt Mangan(III)-acetylacetonat und Kobalt(III)acetessigester. Außerdem kann die Polymerisation auch durch Strahlung, gegebenenfalls in Gegenwart von Sensibilisatoren, wie Benzoinderivaten, ausgelöst werden.

Die Initiatoren werden im allgemeinen in einer Menge von 0,05 bis 5 Gewichtsprozent, vorzugsweise 0,1 bis 1,0 Gewichtsprozent, bezogen auf die Monomerenmenge, verwendet. Die optimale Menge und der optimal wirksame Initiator lassen sich durch Versuche leicht ermitteln.

Die Polymerisation kann in Substanz durchgeführt werden. Vorteilhaft arbeitet man jedoch in Gegenwart von Lösungs- oder Verdünnungsmitteln. Geeignet sind beispielsweise Ketone, wie Methyläthyl- oder Methylpropylketon; Äther wie Diäthyläther, Tetrahydrofuran oder Dioxan; aliphatische, cycloaliphatische oder aromatische Kohlenwasserstoffe, wie Hexan, Heptan, Cyclohexan, Benzol oder Toluol; gut geeignet ist auch Dimethylformamid.

Auch die Copolymerisation, z.B. mit Styrol, im Molverhältnis 1 : 1 oder die Terpolymerisation mit Styrol und Maleinsäureanhydrid im Molverhältnis 1 : 1 : 1 erfolgt unter den vorgenannten Bedingungen einer kontinuierlichen Polymerisation. Als Initiatoren sind hier Peroxide oder andere oben genannte Katalysatoren geeignet. Die radikalisch initiierte Polymerisation kann in einem weiten Temperaturbereich erfolgen, etwa zwischen 0 und 150°C, vorzugsweise zwischen 50 und 120°C bei Reaktionszeiten von 2 bis 20 Stunden.

Die Copolymerisation der olefinisch ungesättigten Verbindungen mit Äthylen oder Butadien wird vorteilhaft in aliphatischen oder aromatischen Kohlenwasserstoffen durchgeführt, indem man die miteinander copolymerisierbaren Monomeren in das Lösungsmittel, das einen Initiator enthält, einbringt. Die Copolymerisation mit Acrylsäure wird ebenfalls radikalisch in aromatischen oder aliphatischen Kohlenwasserstoffen unter den für die Polymerisation von Acrylsäure bekannten Bedingungen durchgeführt.

Die erfindungsgemäßen Polymerisate, die K-Werte von 10 bis 60, vorzugsweise von 20 bis 40 aufweisen, sind aufgrund ihres Gehaltes an Amidoacetalgruppen leicht modifizierbar. Sie werden beispielsweise für die Herstellung von Formkörpern, Überzügen oder Klebemitteln, auch im Gemisch mit anderen Kunststoffen, z.B. mit Polyäthylen, Polypropylen oder mit Mischpolymerisaten aus Vinylacetat und Äthylen, verwendet. Wegen ihrer oberflächenaktiven Eigenschaften sind die Polymerisate unter anderem auch zum Veredeln von Textilien geeignet.

Von besonderem technischem Interesse sind ferner die Copolymerisate, z.B. mit Styrol. Diese Produkte sind löslich, z.B. in Dimethylformamid oder N-Methylpyrrolidon, hochmolekular, mit Pigmenten mischbar und lassen sich nach den üblichen Methoden bei verhältnismäßig niederen Temperaturen pfropfen.

Die in den Beispielen genannten Teile und Prozent beziehen sich jeweils auf das Gewicht.

Beispiel 1

Styrol und die Verbindung der Formel III werden in Toluol in bestimmten Mengenverhältnissen gemischt, mit jeweils 3 Gewichtsprozent Azodiisobutyronitril versetzt und in 150 Minuten bei 80°C polymerisiert.

Die Polymerisatlösungen werden im Rotationsverdampfer eingeengt. Die erhaltenen Ergebnisse sind in der folgenden Tabelle zusammengefaßt.

| Nr. | Styrol | Verbind. III Teile | Umsatz % | K-Wert | Anteil der Verbind. III im Copolymerisat in % |
|---|---|---|---|---|---|
| a | 9,9 | 0,1 | 90 | 46 | 0,95 |
| b | 9,5 | 0,5 | 90 | 49 | 4,95 |
| c | 9,0 | 1,0 | 87 | 50 | 9,9 |
| d | 8,5 | 1,5 | 88 | 52 | 14,9 |
| e | 8,0 | 2,0 | 85 | 69 | 19,9 |
| f | 7,0 | 3,0 | 86 | 53 | 19,8 |
| g | 6,0 | 4,0 | 86 | 65 | 40,0 |
| h | 5,0 | 5,0 | 88 | 66 | 49,9 |
| i | 4,0 | 6,0 | 92 | 72 | 60,0 |
| j | 2,5 | 7,5 | 94 | 68 | 75,0 |
| k | 1,0 | 9,0 | 94 | 66 | 90,0 |

Beispiel 2

Entsprechend dem Beispiel 1 k werden die Acetale IV, V und IV polymerisiert.

Mit 95 %igem Umsatz werden Copolymerisate erhalten, deren Erweichungstemperatur bei 98°C (IV), 105°C (V) und 107°C (VI) liegen.

Beispiel 3

6 Teile Acrylsäuremethylester und 6 Teile Verbindung III in 15 Teilen Dimethylformamid werden in Gegenwart von 1,5 Teilen Azodiisobutyronitril in 130 Minuten bei 80°C polymerisiert. Das Polymerisat besitzt einen K-Wert von 86 und enthält 50 Gewichtsprozent an einpolymerisiertem III. Der Umsatz liegt bei 96 Prozent.

## Patentansprüche

1. Polymerisate mit K-Werten von 10 bis 160, die Strukturelemente der allgemeinen Formel

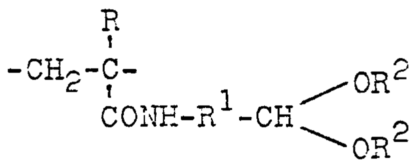

enthalten, worin
$R$ = H, $CH_3$,
$R^1$ = $C_1$- bis $C_8$-Alkylen, Cycloalkylen, Arylen und
$R^2$ = $C_1$- bis $C_4$-Alkyl
bedeuten.

2. Verfahren zur Herstellung von Amidacetalgruppen enthaltenden Polymerisaten mit K-Werten von 10 bis 160, dadurch gekennzeichnet, daß man die olefinisch ungesättigten Verbindungen der allgemeinen Formel

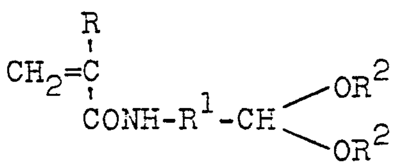
,

worin
$R$ = H, $CH_3$,
$R^1$ = $C_1$- bis $C_8$-Alkylen, Cycloalkylen, Arylen und
$R^2$ = $C_1$- bis $C_4$-Alkyl
bedeuten, gegebenenfalls mit anderen olefinisch ungesättigten Monomeren polymerisiert.

Europäisches Patentamt

**EUROPÄISCHER RECHERCHENBERICHT**

0002767

Nummer der Anmeldung

EP 78 10 1740

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 3 761 357 (R. EPTON et al) * Ansprüche 1,6-9; Spalte 3, Zeilen 28-35 * | 1,2 |
| X | DE - A - 2 552 510 (H. HUEMER) * Zeile 21; Beispiel 12 * | 1,2 |

KLASSIFIKATION DER ANMELDUNG (Int.Cl.)

C 08 F 20/58

RECHERCHIERTE SACHGEBIETE (Int. Cl.)

C 08 F 20/58
120/58
220/58

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 19-03-1979 | DE BUNDEL |

EPA form 1503.1 06.78